# EUROPÄISCHE PATENTANMELDUNG

(11) **EP 0 843 170 A2**
(43) Veröffentlichungstag der Anmeldung: **20.05.1998**
(21) Anmeldenummer: 97119792.6
(22) Anmeldetag: 12.11.1997
(51) Int. Cl.: G01N 13/02

(54) **Vorrichtung zur Messung der Oberflächenspannung von Flüssigkeiten**

(30) Priorität: 13.11.1996 DE 19646925
(71) Anmelder: FRAUNHOFER-GESELLSCHAFT ZUR FÖRDERUNG DER ANGEWANDTEN FORSCHUNG E.V., 80636 München (DE)
(72) Erfinder: Janocha, Bernd, Dipl.-Chem., 65187 Wiesbaden (DE); Renzow, Dieter, Ing. (grad.), 71277 Rutesheim (DE); Müller, Michael, Dipl.-Phys., Dr., 70599 Stuttgart (DE)
(74) Vertreter: Pfenning, Meinig & Partner

(57) **Zusammenfassung**

Die Erfindung betrifft eine Vorrichtung zur Messung der Oberflächenspannung von Flüssigkeiten, ein Verfahren dazu und die Verwendung einer solchen Vorrichtung zur Bestimmung bzw. Überwachung von Konzentrationen oberflächenaktiver Stoffe in den Flüssigkeiten. Dabei soll es möglich sein, die Oberflächenspannung verschiedenster Flüssigkeiten weitestgehend kontinuierlich und automatisierbar mit ausreichender Genauigkeit und damit auch die Konzentration oberflächenaktiver Stoffe in den Flüssigkeiten zu bestimmen. Hierfür wird die Flüssigkeit tropfenweise durch die Kanüle einer Spritze gedrückt und die Zeit bis zum Abreißen eines Tropfens als Maß für die Oberflächenspannung gemessen. Die Flüssigkeit gelangt über eine Zuführung in die Spritze und der Spritzenkolben wird mit einem von einer speicherprogrammierbaren Steuerung steuerbaren Antrieb bewegt, so daß ein definierter Volumenstrom durch die Kanüle in eine Meßzelle mit einer Lichtschranke gepreßt wird. Die Oberflächenspannung wird mit der Kolbengeschwindigkeit und der Verweildauer des/der Tropfen(s) an der Kanüle bestimmt. Das Verfahren und die entsprechende Vorrichtung können universell und flexibel vor Ort ohne Probennahme aber auch als stationäre Meßsonde eingesetzt werden, wobei reproduzierbare Meßergebnisse erhalten werden.

## Beschreibung

Die Erfindung betrifft eine Vorrichtung zur Messung der Oberflächenspannung von Flüssigkeiten, ein Verfahren dazu und die Verwendung einer solchen Vorrichtung zur Bestimmung bzw. Überwachung von Konzentrationen oberflächenaktiver Stoffe in den Flüssigkeiten. Die Meßwerte sollen dabei insbesondere für eine automatische Überwachung von Konzentrationen oberflächenaktiver Stoffe eingesetzt werden.

Von T. Müller-Kirschbaum, E.J. Smulders wurde in "Das On-line Tensiometer", SÖFW-Journal, 118 (1992), Seiten 427 bis 434 ein Meßverfahren zur Bestimmung der dynamischen Oberflächenspannung zur Prozeßbadüberwachung auf der Basis der Blasendruckmethode beschrieben.

In der gleichen Zeitschrift wurde dann von R. Miller, A. Hofmann, K.-H. Schano, A. Halbig, R. Hartmann im Artikel "Ein automatisches Tropfenvolumentensiometer zur Messung von Oberflächen- und Grenzflächenspannungen" auf den Seiten 435 bis 441 eine Meßmethode beschrieben, bei dem ein Tropfenvolumen durch die Kanüle einer Spritze herausgedrückt wird und die Geschwindigkeit des Spritzenkolbens variabel ist und die Tropfenbildungsgeschwindigkeit entsprechend variiert werden kann. Überschreitet die auf den Tropfen wirkende Schwerkraft die Haltekraft, die durch die Oberflächenspannung der Flüssigkeit vorhanden ist, reißt der Tropfen von der Kanüle ab.

Dabei ist davon auszugehen, daß die Adsorption oberflächenaktiver Substanzen, die in der Flüssigkeit enthalten sind, an der bei der Ausbildung des Tropfens gebildeten Flüssigkeits-Luft-Grenzfläche zeitabhängig ist. Ein kleinerer Volumenstrom, der durch die Kanüle gedrückt wird, bedeutet eine längere Verweilzeit des Tropfens an der Kanüle, wobei eine größere Menge der oberflächenaktiven Stoffe, an der Grenzfläche adsorbieren kann. Bei gleicher Probenflüssigkeit sind die Meßwerte bis zum Erreichen des Adsorptionsgleichgewichtes für die Oberflächenspannung niedriger, wenn der ausgebildete Tropfen entsprechend länger an der Kanüle hängt. Dieser Sachverhalt wurde von R. Miller, K.-H. Schano in "Automated Drop Volume Method" in Tenside Surf. Det., 27 (1990), Seiten 238 bis 242 als dynamische Oberflächenspannung bezeichnet.

Mit den bisher beschriebenen und bekannten Möglichkeiten ist es jedoch nicht möglich, eine kontinuierliche, automatisierbare Überwachung von verschiedenen Flüssigkeiten mit ausreichend hoher Genauigkeit durchzuführen.

Es ist daher Aufgabe der Erfindung, eine Möglichkeit zu schaffen, die Oberflächenspannung verschiedenster Flüssigkeiten weitestgehend kontinuierlich und automatisierbar mit ausreichender Genauigkeit messen zu können, wobei außerdem die Möglichkeit bestehen soll, auch die Konzentration oberflächenaktiver Stoffe in der Flüssigkeit bestimmen zu können.

Erfindungsgemäß wird diese Aufgabe durch die im Anspruch 1 genannten Merkmale für die Vorrichtung und die Merkmale des Anspruchs 12 für das Verfahren gelöst. Vorteilhafte Ausgestaltungsformen und Weiterbildungen der Erfindung ergeben sich mit der Nutzung der in den untergeordneten Ansprüchen genannten Merkmale. Außerdem kann die Erfindung, wie dies der Anspruch 14 aussagt, vorteilhaft für die Konzentrationsüberwachung von Reinigern in wässrigen Reinigungsbädern, zur Überwachung der Konzentration von Resten verschleppter Reiniger (z.B. Tensiden) in Spülbädern von Reinigungsanlagen, zur Überwachung der Konzentration von Netzmitteln in Galvanikbädern, der Konzentrations-Überwachung von Kühlschmieremulsionen, der Überwachung bzw. Detektion von oberflächenaktiven Stoffen in Wasser (z.B. Abwasser, Reinstwasser, Oberflächengewässern, in Kläranlagen u.a.) oder der Überwachung der Konzentration von oberflächenaktiven Substanzen, die in fotografischen Bädern enthalten sind, verwendet werden.

Mit der erfindungsgemäßen Vorrichtung und dem Vorgehen nach dem Verfahren kann mit der Messung der Oberflächenspannung von verschiedensten Flüssigkeiten sehr vorteilhaft auch die Konzentration oberflächenaktiver Substanzen, die in den zu prüfenden Flüssigkeiten enthalten sind, erfaßt und überwacht werden. Eine solche Überwachung ist besonders bei technischen Bädern sinnvoll, da sich deren Qualität während des Gebrauches verändert und gegebenenfalls neue Zusätze zugegeben werden müssen oder ein vollständiger Austausch durchgeführt werden muß. Dies ist insbesondere dadurch möglich, daß eine eindeutige Korrelation zwischen der Konzentration der oberflächenaktiven Zusätze und der meßbaren dynamischen Oberflächenspannung vorhanden ist. So kann beispielsweise in Bädern die Tensidkonzentration sowohl unter- als auch oberhalb der kritischen Mizellbildungskonzentration erfaßt werden.

Die Überwachung kann dabei quasikontinuierlich und vollständig automatisch erfolgen, wobei die gemessenen Werte einmal angezeigt werden können und zum anderen zur Beeinflussung der Badqualität bzw. zur Auslösung eines vollständigen Austausches des Bades oder bei bestimmten Anwendungsfällen zur Generierung eines Signales, das eine unerwünschte Konzentration anzeigt, benutzt werden können.

Das Gerät ist als Baueinheit direkt vor Ort einsetzbar. Probeentnahmen sind nicht notwendig. Das Gerät ist flexibel handbar, kann aber auch stationär verwendet werden. Ein Einsatz als Meßsonde ist daher möglich.

Es können einzelne oberflächenaktive Substanzen oder die Gesamtkonzentration einer Mischung verschiedenster oberflächenaktiver Substanzen überwacht werden.

Neben der vollständig automatisierten Zuführung der zu prüfenden bzw. zu überwachenden Flüssigkeit mit definiertem Volumenstrom durch die Kanüle, der bei der erfindungsgemäßen Vorrichtung zu verwendenden Spritze, wirkt sich besonders vorteilhaft aus, daß die Probe temperiert werden kann und durch die Einhaltung eines bestimmten engen Temperaturbereiches der Flüssigkeit Schwankungen der Oberflächenspannung ausgeschlossen werden können. Hierfür ist einmal die Spritze mit einem Thermostatgefäß umschlossen, durch das eine entsprechend temperierte Flüssigkeit geführt wird. Die temperierte Flüssigkeit gelangt durch einen Einlaß in das Thermostatgefäß und wird durch einen bevorzugt an einer entgegengesetzten Seite des Thermostatgefäßes angeordneten Auslaß wieder abgeführt.

Neben der Temperierung der Probe, die durch Einhaltung eines engen Temperaturbereichs den Einfluß der Temperatur auf die Flüssigkeitsoberflächenspannung konstant und damit in der Berechnung normierbar hält, wirkt sich besonders vorteilhaft die Befüllung der Spritze mit der zu prüfenden bzw. zu überwachenden Flüssigkeit durch den Spritzenkolben hindurch aus.

In gleicher Weise kann auch die Meßzelle, in der die Lichtschranke, mit der die Verweilzeit der Tropfen an der Kanüle gemessen wird, angeordnet ist, mit einem zweiten Thermostatgefäß umgeben sein.

Bei der Überwachung der Konzentration von oberflächenaktiven Stoffen in verschiedensten Bädern kann zur Temperierung bevorzugt die eigene Badflüssigkeit verwendet werden, was auf einfache und ohne größeren zusätzlichen Aufwand erforderliche Art und Weise erreicht werden kann. Dabei sollte jedoch das zur Verfügung stehende Badvolumen ausreichend groß und die Zuleitungen kurz genug sein, um Temperaturveränderungen in der Leitung gering zu halten. Die Verbindungsschläuche müssen isoliert sein.

Ebenfalls vorteilhaft ist in der Meßzelle ein Abfluß zur Abführung der Probenflüssigkeit vorhanden, der jedoch mit seiner Öffnung so angeordnet ist, daß immer ein Probenrest in der Meßzelle verbleibt und eine der Temperierung entsprechende gesättigte Wasserdampfatmosphäre in der Meßzelle erhalten wird und so die zu Meßfehlern führende Verdunstung der an der Kanüle hängenden Tropfen minimiert werden kann.

Die einfach aufgebaute erfindungsgemäße Vorrichtung kann mit geringem Aufwand so ergänzt werden, daß mehrere verschiedene Bäder bzw. Flüssigkeitsproben mit einer einzigen Vorrichtung überwacht werden können. Hierfür sind in die Zuführungsleitungen für die verschiedenen Flüssigkeitsproben steuerbare Ventile geschaltet, die intermittierend geöffnet und die verschiedenen Proben nacheinander durch die Kanüle zur Tropfenbildung geführt werden können. Dabei ist zu berücksichtigen, daß zwischen den jeweiligen Messungen für die verschiedenen Flüssigkeiten bzw. Bäder Pausen berücksichtigt werden, die ausreichend sind, um durch eine Spülung ein unerwünschtes Verbleiben von Resten der vorherigen Probe in der Meßanordnung zu vermeiden.

Vorteilhaft ist in der Zuleitung für die Probenflüssigkeit eine Pumpe angeordnet, mit der die Spritze gefüllt werden kann. Bei laufender Pumpe und gleichzeitigem Hochziehen des Spritzenkolbens wird gesichert, daß eine Ansammlung von Gasblasen in der Spritze weitestgehend verhindert werden kann. Vor dem Beginn der eigentlichen Messung wird dann die Pumpe abgeschaltet und somit dient sie gleichzeitig als Sperre und verhindert ein Zurückfließen der Probenflüssigkeit aus der Spritze.

Wird nun, wie dies bereits als vorteilhaft erwähnt worden ist, Badflüssigkeit zur Temperierung verwendet, kann eine gemeinsame Pumpe zur Förderung der Probenflüssigkeit und der Temperierungsflüssigkeit verwendet werden. Die Leitungslänge sollte bei der erfindungsgemäßen Vorrichtung so kurz als möglich und isoliert gehalten werden, um Temperaturdifferenzen wieder klein halten zu können.

Vorteilhaft erfolgt sowohl die Steuerung der erfindungsgemäßen Vorrichtung, wie auch die Auswertung der gemessenen Werte mit einer speicherprogrammierbaren Steuerung. Diese ist einmal in der Lage, die Ventile für die verschiedenen Flüssigkeitsproben bzw. Bäder intermittierend zu öffnen bzw. zu schließen, die Pumpe für den Vorlauf und gegebenenfalls eine im Rücklauf angeordnete Pumpe sowie den Antrieb für den Spritzenkolben zu steuern. Mit der Steuerung des Spritzenkolbenantriebes kann einmal der Volumenstrom, der durch die Kanüle der Spritze geführt wird, beeinflußt und gleichzeitig das Steuersignal in der speicherprogrammierbaren Steuerung benutzt werden, um die Oberflächenspannung mit dem von der Lichtschranke in der Meßzelle gemessenen Zeitsignal für die Verweilzeit des Tropfens an der Kanüle zu bestimmen.

Die gemessene dynamische Oberflächenspannung der Flüssigkeit kann dann weiter dazu benutzt werden, die Konzentration oberflächenaktiver Stoffe in der Flüssigkeit zu bestimmen. Dies kann durch den Vergleich mit in der speicherprogrammierbaren Steuerung abgelegten Eichwerten erreicht werden.

Die ermittelten Werte können einmal angezeigt und zum anderen können mit den ermittelten Werten direkt Steuersignale in der speicherprogrammierbaren Steuerung erzeugt werden, die beispielsweise einen Wechsel der Badflüssigkeit oder die Zugabe von oberflächenaktiven Stoffen in die Flüssigkeit auslösen.

Nachfolgend soll die Erfindung an Ausführungsbeispielen näher beschrieben werden.

Dabei zeigt:
- Fig. 1: ein Diagramm zur Konzentrationsbestimmung von technischen Reinigern;
- Fig. 2: ein Diagramm einer Überwachung von Reinigungsbädern;
- Fig. 3: ein Diagramm einer Überwachung von Spülbädern;
- Fig. 4: ein Diagramm einer Überwachung von Oberflächengewässern;
- Fig. 5: ein Diagramm einer Netzmittelüberwachung in Galvanikbädern;
- Fig. 6: ein Diagramm einer Überwachung von Kühlschmieremulsionen;
- Fig. 7: ein Blockschaltbild eines Aufbaus mit einer erfindungsgemäßen Vorrichtung;
- Fig. 8: eine Schnittdarstellung durch eine erfindungsgemäß verwendbare Spritze und
- Fig. 9a bis 9d: verschiedene erfindungsgemäße Varianten von Zu- und Abführungen von Probenflüssigkeit in eine Spritze der erfindungsgemäßen Vorrichtung.

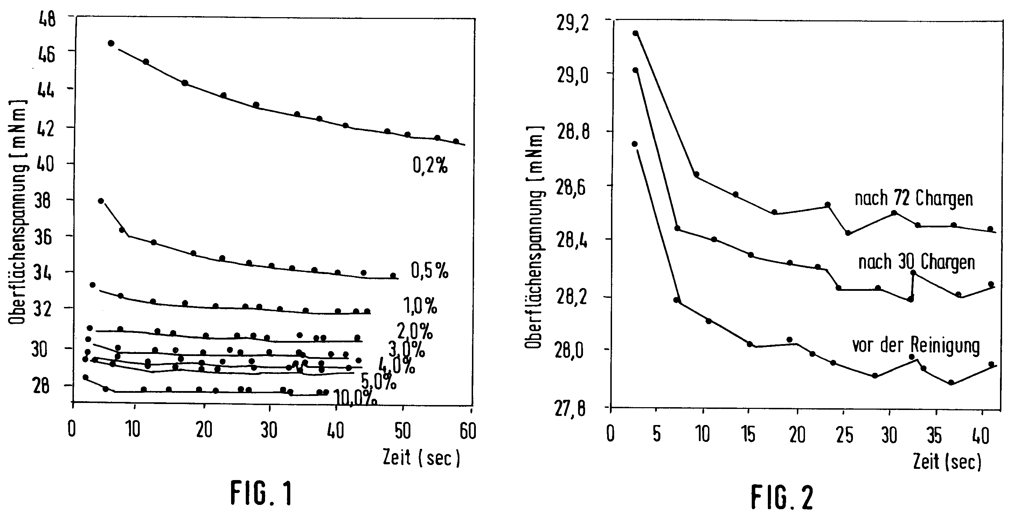

In den Figuren 1 bis 6 sind Diagramme dargestellt, denen entnommen werden kann, daß das erfindungsgemäße Verfahren und die entsprechend ausgebildete Vorrichtung für die verschiedensten Anwendungsfälle geeignet ist und signifikante Meßwerte erhalten werden können.

Die im in der Figur 1 gezeigten Diagramm eingetragenen Meßwerte entsprechen den verschiedenen dynamischen Oberflächenspannungen eines komplexen Industriereinigers in einem relativ großen Konzentrationsbereich zwischen 0,2 % und 10 % in Wasser.

Das in der Figur 2 gezeigte Diagramm enthält Meßwerte einer Überwachung von Reinigungsbädern, wobei die dynamische Oberflächenspannung in der Badflüssigkeit einmal vor Beginn von Reinigungen und darauf folgend nach verschiedenen Anzahlen von im gleichen Bad gereinigten Chargen gemessen worden ist. Die Oberflächenspannung steigt, da oberflächenaktive Stoffe aus dem Bad verschleppt werden. Auch hier ist deutlich erkennbar, daß eine Überwachung mit der erfindungsgemäßen Vorgehensweise sinnvoll ist und ebenfalls repräsentative Meßergebnisse erhalten werden können.

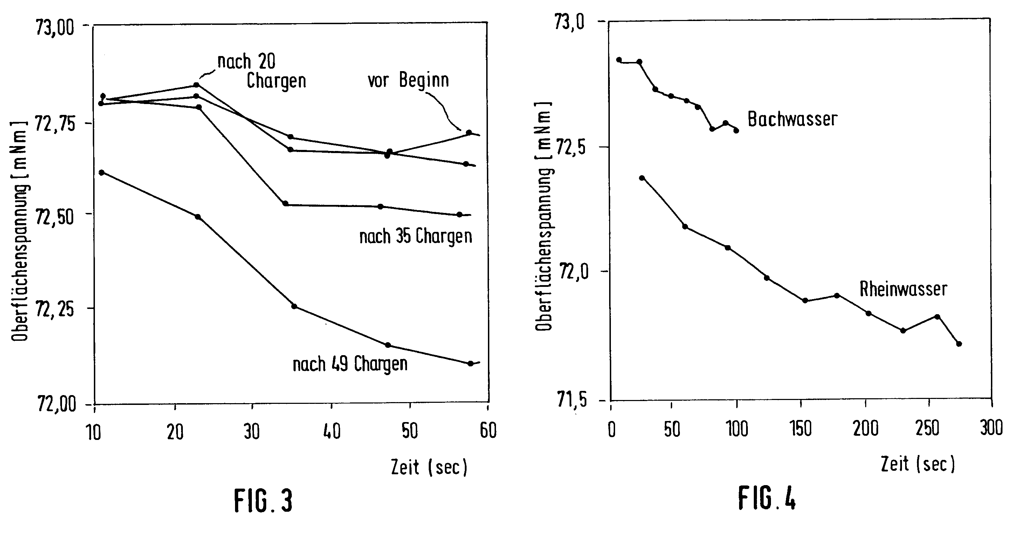

Neben der Überwachung von Reinigungsbädern, können selbstverständlich auch Spülbäder auf ihre Qualität überwacht werden, wie dies in der Figur 3 gezeigt ist. Dabei verhalten sich die gemessenen Werte für die Oberflächenspannung genau entgegengesetzt zu den in der Figur 2 gezeigten Meßwerten und mit Anzahl der gespülten Chargen sinkt jeweils die Oberflächenspannung.

Das in der Figur 4 gezeigte Diagramm gibt den Unterschied der gemessenen dynamischen Oberflächenspannung von Oberflächengewässern wieder. Dabei wurde einmal relativ sauberes Bachwasser und im Gegensatz dazu relativ verschmutztes Rheinwasser entsprechend überwacht.

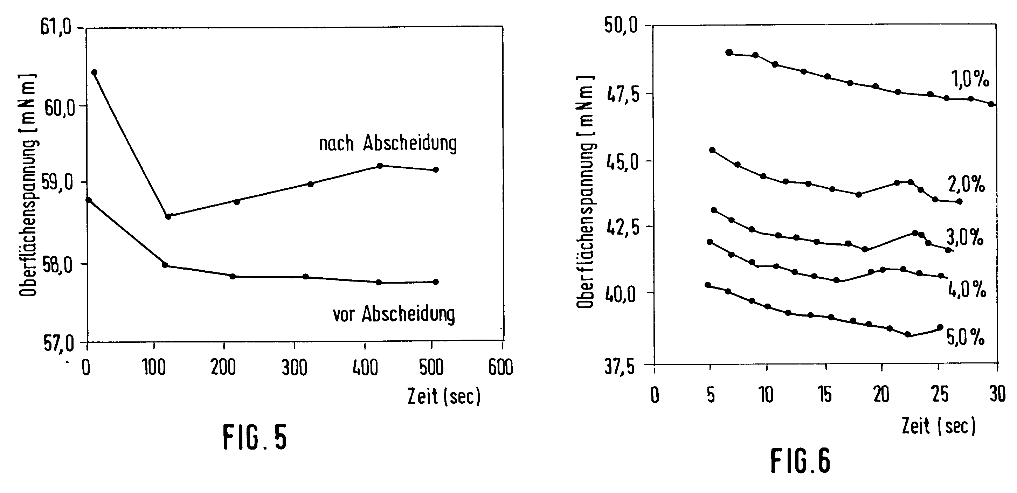

Das in der Figur 5 gezeigte Diagramm weist die Eignung des erfindungsgemäßen Verfahrens auch bei der Netzmittelüberwachung in Galvanikbädern nach. Dies ist besonders wichtig, da die Badqualität einen großen Einfluß auf die abzuscheidende Schicht hat. Es kann also mit den gemessenen Werten gezielt Einfluß auf die Zusammensetzung des Bades genommen werden und bei Bedarf ein Nachdosieren von Netzmitteln bzw. ein vollständiger Wechsel der Badflüssigkeit initiiert werden.

In der Figur 6 ist eine weitere mögliche Anwendung der Erfindung nachgewiesen. Dabei wurde dort die Konzentration von Kühlschmieremulsionen in destilliertem Wasser gemessen und eine eindeutige Abhängigkeit der gemessenen Oberflächenspannungswerte von der Konzentration konnte nachgewiesen werden.

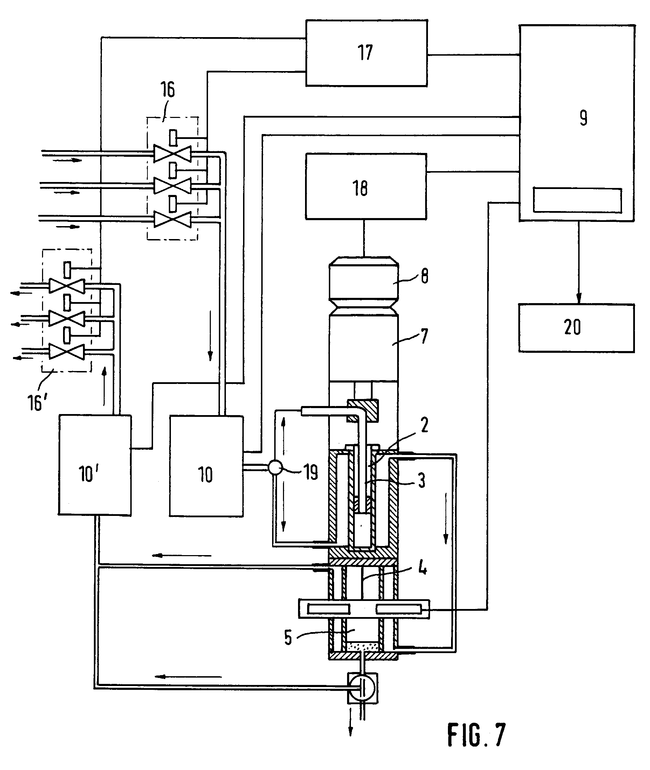

Das in der Figur 7 gezeigte Blockschaltbild gibt den prinzipiellen Aufbau einer erfindungsgemäßen Vorrichtung wieder.

Dabei ist die erfindungsgemäß zu verwendende Spritze 2 mit einem aus einem Motor 8 und einem Getriebe 7 gebildeten Antrieb für den Spritzenkolben 3 versehen, der von einer speicherprogrammierbaren Steuerung 9 direkt oder, wie dies in der Figur 7 gezeigt ist, über eine zusätzliche Motorsteuerung 18 gesteuert wird. Dabei kann einmal die Bewegungsrichtung des Spritzenkolbens 3 und auch dessen Geschwindigkeit beeinflußt werden.

Außerdem ist eine zusätzliche Ventilsteuerung 17 vorhanden, die von der speicherprogrammierbaren Steuerung 9 entsprechende Signale erhält, um Ventile 16, 16' zu öffnen bzw. zu schließen. Bei diesem Beispiel sind jeweils drei verschiedene Ventile zu einem Ventilblock 16 und 16' zusammengefaßt, deren Zu- bzw. Abflußleitungen beispielsweise mit verschiedenen Bädern, die überwacht werden sollen, verbunden sind.

Wird eines der drei Ventile des Ventilblockes 16 geöffnet, gelangt die entsprechende Probenflüssigkeit durch eine Zuleitung zu einer Pumpe 10 für den Vorlauf, die die Flüssigkeit über einen Regler 19 einmal in die Spritzenzuführung und von dort in die Spritze fördert. Dabei kann der Regler 19 den Volumenstrom, der in die Spritze 2 gefördert wird und einen zweiten Volumenstrom, der zur Temperierung der Spritze 2 und der Meßzelle 5 benutzt wird, entsprechend beeinflussen.

Für die Temperierung sind die Spritze 2 und die Meßzelle 5 mit Thermostatgehäusen umgeben, durch die die entsprechend temperierte Flüssigkeit gefördert wird, damit die Meßbedingungen nahezu konstant gehalten werden können.

Bei ausreichend gefüllter Spritze 2 kann dann durch die Aktivierung des Antriebes die Flüssigkeit aus der Spritze 2 über die Kanüle 4 tropfenweise gefördert und in der Meßzelle 5 mit einer dort angeordneten Lichtschranke 6, die Zeit bis zum Abriß der ausgebildeten Tropfen als Maß für die Oberflächenspannung der Flüssigkeit gemessen werden. Die Zeitsignale werden in der speicherprogrammierbaren Steuerung 9 gemeinsam mit der jeweils bekannten Kolbengeschwindigkeit verarbeitet, um die Oberflächenspannung und ggf. die Konzentration von oberflächenaktiven Stoffen zu bestimmen. Die Ergebnisse können dann über eine Schnittstelle 20 zu einer Anzeige oder einer Steuerung übertragen werden.

Sowohl die durch die Spritze 2 geförderte Meßflüssigkeit, wie auch die zur Temperierung verwendete Flüssigkeit kann dann über Abflußleitungen und eine im Rücklauf angeordnete Pumpe 10' rückgeführt werden, wobei in dem Ventilblock 16' das jeweils mit dem entsprechenden Bad verbundene Ventil, für die Probenflüssigkeit geöffnet ist. Die beiden anderen Ventile sind zu diesem Zeitpunkt geschlossen, so daß eine Vermischung der verschieden Badflüssigkeiten vermieden wird.

Wird dann ein Meßvorgang für eines der beiden anderen Bäder ausgelöst, muß die gesamte Vorrichtung ausreichend mit der Flüssigkeit dieses Bades gespült werden, um eine Vermischung der verschiedenen Bäder und eine Verfälschung des Meßergebnisses zu verhindern.

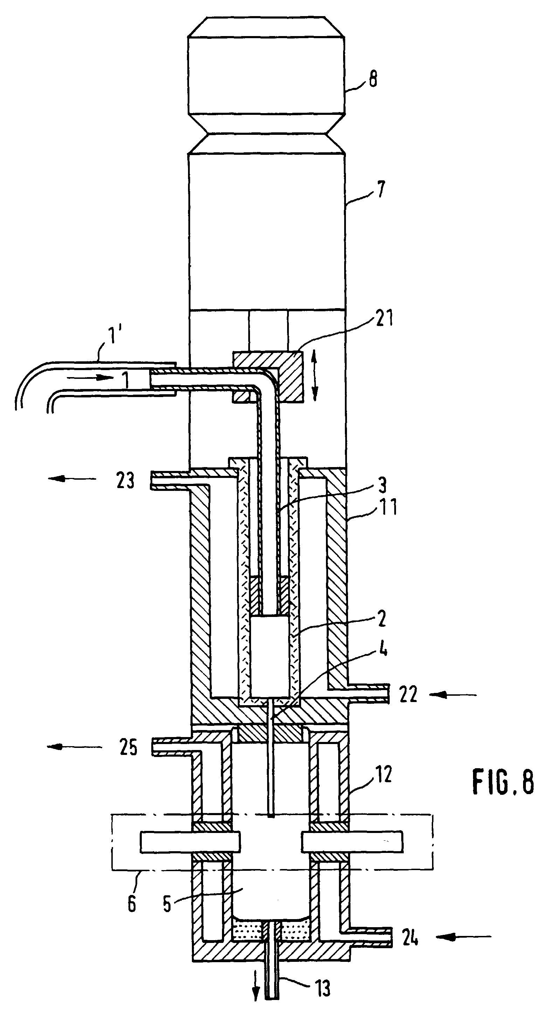

Die Figur 8 zeigt dann den Aufbau einer erfindungsgemäß zu verwendenden Spritze 2 mit der sich daran anschließenden Meßzelle 5 in vergrößerter Darstellung. Die Probenflüssigkeit gelangt über die flexible Zuleitung 1 in den abgewinkelten Teil des Spritzenkolbens 3. Die Führung und Verbindung zu dem Motorantrieb des Spritzenkolbens erfolgt über das Führungsstück 21.

Dabei gelangt Probenflüssigkeit über einen Schlauch 1' in den Spritzenkolben 1, der zumindest teilweise flexibel ausgebildet ist. Zur Umlenkung dient auch ein Führungsstück 21.

Wird nun mit dem Antrieb 7 und 8 der Spritzenkolben 3 nach unten bewegt, wird Probenflüssigkeit durch die Kanüle 4 der Spritze 2 gefördert und am Ende der Kanüle 4 bildet sich in der Meßzelle 5 ein Tropfen aus, wobei die Zeit bis zum Abriß des Tropfens von der Kanüle 4 mit einer in der Meßzelle 5 angeordneten Lichtschranke 6 gemessen werden kann.

Am Boden der Meßzelle 5 ist ein Auslaß 13 für die Probenflüssigkeit vorhanden, der bei diesem Beispiel etwas erhaben über dem Boden der Meßzelle 5 hinausragt, so daß gesichert ist, daß in der Meßzelle immer ein Flüssigkeitsrest verbleibt.

Die Spritze 2 ist mit einem Thermostatgefäß 11 umgeben, das einen Hohlraum um die Spritze 2 ausbildet und entsprechend temperierte Flüssigkeit durch einen Zufluß 22 in das Thermostatgefäß 11 gefördert wird, die durch einen Abfluß 23 wieder abführbar ist.

Auch die Meßzelle 5 kann von einem Thermostatgefäß 12, das entsprechend aufgebaut ist, umschlossen sein, um auch dort eine nahezu konstante Temperatur einhalten zu können. Hierfür ist eine Zuleitung 24 für temperierte Flüssigkeit und eine Ableitung 25 ebenfalls vorhanden. Die Ableitung 23 kann mit der Zuleitung 24 verbunden sein und die entsprechend temperierte Flüssigkeit nacheinander die beiden Thermostatgefäße 11 und 12 durchströmen. Es besteht aber auch die Möglichkeit, eine gesonderte Zuleitung zur Zuführung 24 vorzusehen.

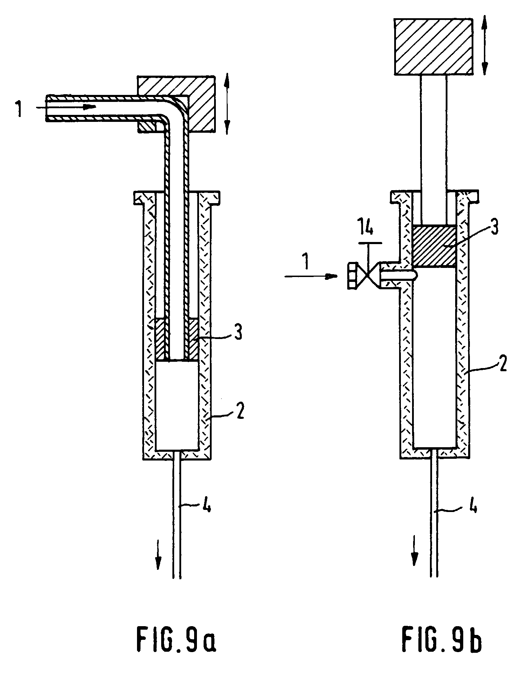

Die Figuren 9a bis 9d zeigen verschiedene Möglichkeiten von Zuführungen und Abführungen für die Probenflüssigkeiten in eine erfindungsgemäß verwendbare Spritze 2.

Das in der Figur 9a gezeigte Beispiel entspricht dem, das bereits in Figur 8 gezeigt worden ist. Die Zuführung der Probenflüssigkeit erfolgt über die Zuleitung 1 durch den Kolbenschaft und den Spritzenkolben 3 direkt in die Spritze 2 hinein und kann dann über die Kanüle 4 gefördert werden.

Bei dem in der Figur 9b gezeigten Beispiel ist die Zuleitung 1 direkt in den Hohlraum der Spritze 2 geführt und mit einem Ventil 14, das ebenfalls von der speicherprogrammierbaren Steuerung 9 geöffnet bzw. geschlossen werden kann, ist es möglich ein Zurückströmen der Probenflüssigkeit aus der Spritze 2 zu verhindern, wenn der Kolben 3 in Richtung auf die Kanüle 4 bewegt wird.

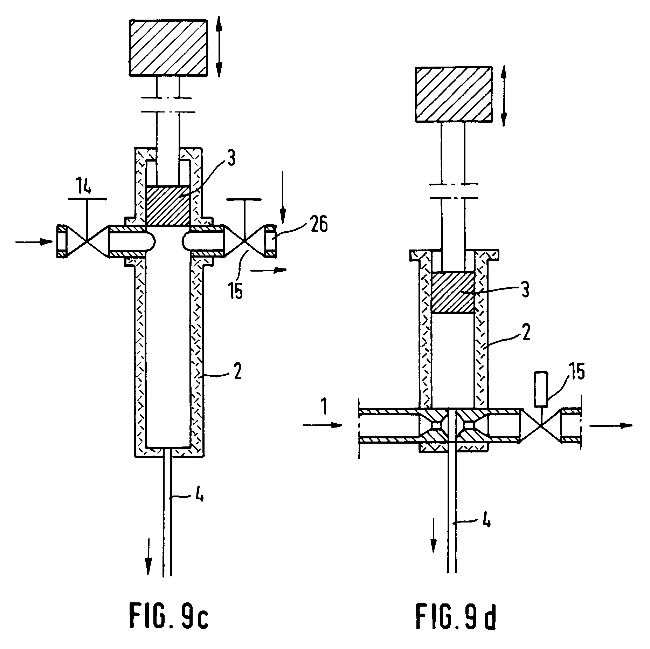

Das in der Figur 9c gezeigte Beispiel ist um einen zusätzlichen Auslaß 26, der ebenfalls mit einem steuerbaren Ventil 15 verschließbar ist, ergänzt worden. Damit können größere Durchlaßmengen erreicht werden.

Beim Beispiel nach Figur 9d erfolgt die Zuführung der Probenflüssigkeit über eine nur geringfügig oberhalb der Kanüle 4 angeordnete Zuführung 1 und es ist eine ebenfalls mit einem steuerbaren Ventil 15 verschließbare Abflußleitung vorhanden. Dabei kann bei geschlossenem Ventil 15 über die Leitung 1 Probenflüssigkeit in die Spritze 2 gefördert werden.

## Patentansprüche

1. Vorrichtung zur Messung der Oberflächenspannung von Flüssigkeiten, die tropfenweise durch die Kanüle einer Spritze gedrückt und bei der die Zeit bis zum Abreißen eines Tropfens als Maß für die Oberflächenspannung erfaßbar ist,
dadurch **gekennzeichnet,**
daß die Flüssigkeit über eine Zuführung (1) in die Spritze (2) gelangt, der Spritzenkolben (3) mit einem von einer speicherprogrammierbaren Steuerung (9) steuerbaren Antrieb (7, 8) einen definierten Volumenstrom durch die Kanüle (4) in eine Meßzelle (5) mit einer Lichtschranke (6) preßt, wobei die Oberflächenspannung mit der Kolbengeschwindigkeit und der Verweildauer von Tropfen an der Kanüle meßbar ist.

2. Vorrichtung nach Anspruch 1,
dadurch gekennzeichnet, daß die Zuführung (1) der Flüssigkeit durch den Kolben (3) geführt ist.

3. Vorrichtung nach einem der Ansprüche 1 bis 2,
dadurch gekennzeichnet, daß an der Spritze (2) eine mit einem Ventil (14) sperrbare Zuführung (1) vorhanden ist.

4. Vorrichtung nach einem der Ansprüche 1 bis 3,
dadurch gekennzeichnet, daß die Flüssigkeit mit einer Pumpe (10) in die Spritze (2) förderbar ist.

5. Vorrichtung nach einem der Ansprüche 1 bis 4,
dadurch gekennzeichnet, daß ein Abfluß (13) in der Meßzelle (5), so angeordnet ist, daß am Boden der Meßzelle (5) ein Flüssigkeitsrest verbleibt.

6. Vorrichtung nach einem der Ansprüche 1 bis 5,
dadurch gekennzeichnet, daß die Spritze (2) mit einem diese umgebenden Thermostatisiergefäß (11) temperierbar ist.

7. Vorrichtung nach einem der Ansprüche 1 bis 6,
dadurch gekennzeichnet, daß die Meßzelle (5) mit einem diese umgebenden Thermostatisiergefäß (12) temperierbar ist.

8. Vorrichtung nach einem der Ansprüche 1 bis 7,
dadurch gekennzeichnet, daß zur Temperierung eine Flüssigkeit definierter Temperatur durch die, die Meßzelle (5) umgebenden Thermostatisiergefäße (11, 12) führbar ist.

9. Vorrichtung nach einem der Ansprüche 1 bis 8,
dadurch gekennzeichnet, daß an der Spritze (2) ein mit einem Ventil (15) sperrbarer Auslaß (16) vorhanden ist.

10. Vorrichtung nach einem der Ansprüche 1 bis 9,
dadurch gekennzeichnet, daß der Kolbenantrieb (8) ein Schrittmotor ist.

11. Vorrichtung nach einem der Ansprüche 1 bis 10,
dadurch gekennzeichnet, daß verschiedene Flüssigkeitsproben mittels von der speicherprogrammierbaren Steuerung (9) steuerbaren Ventilen (16) intermittierend der Spritze (2) zuführbar sind.

12. Verfahren zur Messung der Oberflächenspannung von Flüssigkeiten mit einer Vorrichtung nach einem der Ansprüche 1 bis 11,
dadurch **gekennzeichnet,**
daß die Flüssigkeit mit einem Kolben (3) einer Spritze (2), der mit einem von einer speicherprogrammierbaren Steuerung (9) gesteuerten Antrieb (7, 8) einen definierten Volumenstrom erzeugt, durch die Kanüle (4) drückt, wobei in der Meßzelle (5) die Zeit bis zum Abriß eines Tropfens gemessen und mit der gemessenen Zeit und der Kolbengeschwindigkeit die Oberflächenspannung berechnet wird.

13. Verwendung der Vorrichtung nach Anspruch 1 zur quasikontinuierlichen Bestimmung der Konzentration von Reinigern in wäßrigen Reinigungsbädern, von Resten verschleppter Reiniger in Spülbädern von Reinigungsanlagen, von Netzmitteln in Galvanikbädern, von Kühlschmieremulsion, von oberflächenaktiven Stoffen in Wasser, wie Oberflächengewässern, Ab- und Reinstwasser oder fotografischen Bädern.
